## Europäisches Patentamt
## European Patent Office
## Office européen des brevets

(19)

(11) Numéro de publication: **0 127 489**
**B1**

(12) **FASCICULE DE BREVET EUROPEEN**

(45) Date de publication du fascicule du brevet:
**22.06.88**

(51) Int. Cl.⁴: **C 23 D 5/02**, C 23 D 5/06,
**A 47 J 36/02**

(21) Numéro de dépôt: **84400720.3**

(22) Date de dépôt: **11.04.84**

(54) Procédé pour émailler le fond d'un récipient culinaire et récipient culinaire s'y rapportant.

(30) Priorité: **15.04.83 FR 8306178**

(43) Date de publication de la demande:
**05.12.84 Bulletin 84/49**

(45) Mention de la délivrance du brevet:
**22.06.88 Bulletin 88/25**

(84) Etats contractants désignés:
**DE FR IT NL**

(56) Documents cités:
**DE - A - 2 217 848**
**DE - A - 2 616 168**
**DE - A - 2 754 037**
**DE - A - 2 843 579**
**FR - A - 2 084 388**
**FR - A - 2 289 627**
**FR - A - 2 419 983**
**FR - A - 2 443 441**

**Le dossier contient des informations techniques présentées postérieurement au dépôt de la demande et ne figurant pas dans le présent fascicule.**

(73) Titulaire: **SEB S.A., F-21260 Selongey (FR)**

(72) Inventeur: **Deville, Jean-Pierre, Route de Monod Poisy,
F-74330 La Balme de Sillingy (FR)**

(74) Mandataire: **Bouju, André, Cabinet Bouju 38 avenue de
la Grande Armée, F-75017 Paris (FR)**

ACTORUM AG

## Description

La présente invention concerne un procédé pour émailler le fond des récipients culinaires, tels que casseroles, poêles, sauteuses et analogues, en aluminium ou autre métal ou alliage, tel que l'acier inoxydable et la tôle d'acier ordinaire.

Les émaux connus destinés à émailler l'aluminium ou les alliages d'aluminium présentent l'inconvénient d'être tendres c'est-à-dire de présenter une faible résistance à l'abrasion et aux rayures. Cet inconvénient résulte de la composition particulière de la fritte d'émail utilisée, dont la température de frittage doit obligatoirement être inférieure à la température de fusion de l'aluminium ou de l'alliage d'aluminium utilisé.

On a tenté de durcir ces émaux par l'adjonction d'agents durcisseurs. Cette tentative est décrite dans le brevet français 2 289 627. Cependant la demanderesse a constaté que l'adjonction de ces agents de durcissement présente le défaut majeur d'affecter considérablement l'adhérence du revêtement d'émail.

En raison des inconvénients précités, les fabricants adoptent en général la solution qui consiste à ne revêtir d'émail que la paroi latérale de l'ustensile, le métal du fond de ce dernier restant nu.

Lors de la fabrication, il est plus facile de revêtir d'émail toute la surface extérieure de l'ustensile, puis d'enlever l'émail du fond de ce dernier par détourage

Outre le fait que ceci rend le fond de l'ustensile difficile à nettoyer, cette opération de détourage réduit l'épaisseur du métal du fond de l'ustensile, de sorte qu'il est nécessaire d'utiliser pour la fabrication de celui-ci, une épaisseur de métal plus importante que celle qui serait nécessaire autrement, afin d'obtenir une résistance mécanique suffisante. Il en résulte ainsi un coût de fabrication augmenté.

On connaît selon la demande de brevet français no 2 419 983 un procédé d'émaillage d'un four dans lequel on superpose deux couches de barbotine de fritte d'émail projetées par pulvérisation aqueuse que l'on cuit en une seule opération. La première couche est séchée partiellement avant d'appliquer la seconde couche. La demanderesse a constaté que le revêtement ainsi obtenu ne présentait pas une tenue suffisante à l'égard des chocs thermiques importants auxquels sont exposés les ustensiles culinaires.

Par ailleurs dans ce document on insiste sur le fait qu'il est obligatoire de prévoir deux couches superposées, la première résistant à la corrosion et la seconde dite de recouvrement renfermant un catalyseur d'autonettoyage. La première couche par conséquent ne se suffit pas en elle-même.

On connaît également selon la demande de brevet allemand 2 217 848 un procédé d'émaillage dans lequel on pulvérise de la poudre d'émail, sur une couche d'émail sous-jacente séchée et encore chaude. Cependant, cette couche est encore chaude pour faire fondre l'agent d'accrochage organique qui est ajouté. Par ailleurs, l'emploi d'un tel agent d'accrochage est nuisible, car il se décompose lors de la cuisson de l'émail en formant des bulles gazeuses qui affectent la tenue mécanique du revêtement.

On connaît d'autre part selon le brevet français 2 084 388, un procédé d'émaillage d'ustensile de cuisson, selon lequel, on dépose sur une couche d'émail préalablement cuite, à travers un masque sérigraphique, un décor d'émail en relief.

Le but de la présente invention est de créer un procédé pour émailler le fond d'un récipient culinaire par deux couches d'émail, dans lequel la seconde couche adhère parfaitement à la première couche et résiste aux contraintes thermiques et à l'abrasion auxquels est exposé ledit fond.

Suivant l'invention, le procédé pour émailler le fond d'un récipient culinaire, dans lequel on applique sur ledit fond au moins deux couches de barbotine d'émail, la première couche étant séchée avant l'application de la seconde couche et les deux couches étant cuites en une seule opération est caractérisé en ce que la première couche de barbotine d'émail est séchée à une température et pendant une durée suffisantes pour abaisser son taux d'humidité à une valeur comprise entre 0,5 et 10% en poids, la seconde couche d'émail est appliquée sur la première couche d'émail ayant ce taux d'humidité, la seconde couche étant appliquée de façon discontinue sous forme de pâte huileuse à travers un masque sérigraphique de façon à obtenir un décor en relief sur la première couche, puis, on procède immédiatement, ou après réchauffage éventuel, à la cuisson desdites couches, pour fritter les émaux.

La mise en œuvre de ce procédé est extrêmement rapide puisqu'on évite la cuisson intermédiaire de la première couche d'émail. Outre le fait que cette rapidité d'exécution du procédé apporte une économie de temps et d'énergie considérables, le métal du récipient culinaire est lors de l'unique opération de cuisson porté pendant un temps minimum à la température de cuisson de l'émail, de sorte que ses propriétés mécaniques ne risquent pas d'être affectées par une exposition trop longue à cette température.

Grâce à un taux aussi faible d'humidité, la première couche de particules de fritte d'émail se présente sous la forme d'un «biscuit» présentant une cohésion mécanique suffisante pour les manipulations ultérieures en particulier pour l'application d'un masque sérigraphique, tout en présentant un haut pouvoir absorbant vis-à-vis de la barbotine d'émail sous forme de pâte huileuse qui est appliquée ensuite par sérigraphie. Un taux aussi faible d'humidité est impossible à obtenir lorsque la première couche est refroidie jusqu'à la température ambiante avant d'appliquer la seconde couche. En effet, la demanderesse a constaté que dans ce cas, la première couche reprend de l'humidité dans l'atmosphère environnante, ce qui diminue ses propriétés absorbantes et entraîne une mauvaise adhérence de la couche d'émail.

Etant donné que la première couche d'émail est sèche et poreuse, celle-ci absorbe la pâte huileuse sérigraphique, de sorte que les particules d'émail de la seconde couche pénètrent dans la première couche. Cette pénétration est favorisée par l'action mécanique du masque sérigraphique. Ainsi après la cuisson simultanée des deux couches, la seconde couche malgré son caractère discontinu adhère remarquablement bien à la première couche, de sorte qu'elle résiste très bien aux contraintes mécaniques et thermiques très sévères exercées sur le fond du récipient.

D'autres particularités et avantages de l'invention apparaîtront encore dans la description ci-après.

Aux dessins annexés donnés à titre d'exemples non limitatifs:

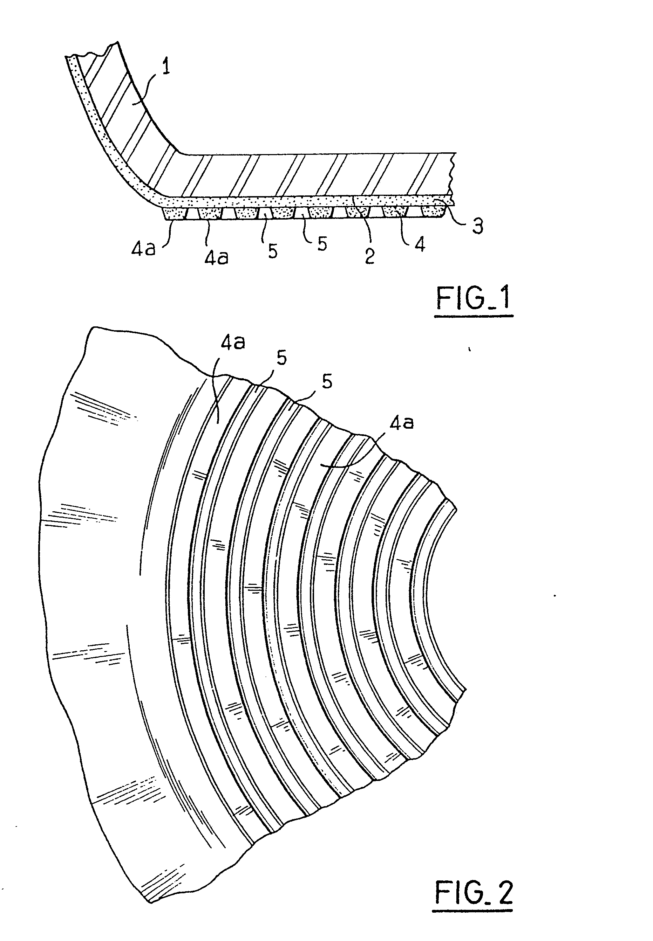

la fig. 1 est une vue en coupe longitudinale partielle du fond d'un récipient culinaire réalisé conformément à l'invention, revêtu d'émail; et

la fig. 2 est une vue en plan partielle du fond du récipient.

Dans la réalisation représentée sur les figures, le récipient culinaire 1 tel qu'une poêle en aluminium ou alliage d'aluminium comporte un fond 2, deux couches superposées d'émail 3, 4, obtenues à partir d'une fritte d'émail frittable à une température inférieure à la température de fusion de l'aluminium ou de l'alliage d'aluminium.

Conformément à l'invention, la couche extérieure 4 comporte une charge d'agents de durcissement appropriée pour rendre cette couche résistante à l'abrasion et la couche intérieure 3 adjacente au fond 2 comporte une charge d'agents de durcissement réduite pour permettre un accrochage optimal avec le fond 2 du récipient.

Les couches d'émail 3 et 4 sont obtenues à partir d'une fritte d'émail classique pour aluminium ou alliage d'aluminium, additionnée d'agents de durcissement tels que de l'alumine α, du carbure de silicium, du quartz, du carbure de tungstène, des silico-aluminates ou des métaux tels que tungstène, titane et acier inoxydable sous de fines particules. Cette fritte d'émail est dépourvue de liant ou d'agent d'accrochage fusible lors du séchage.

L'expérience a montré qu'une excellente résistance à l'abrasion était obtenue lorsque la couche extérieure 4 renferme entre 15 et 40% en poids d'agents de durcissement.

La demanderesse a constaté d'autre part que pour obtenir une excellente adhérence de la couche 3 sur le fond 2 du récipient, celle-ci devait contenir moins de 10% en poids d'agents de durcissement.

Dans l'exemple représenté, la couche d'émail extérieure 4 durcie par les agents de durcissement est constituée par une série d'anneaux concentriques 4a en relief par rapport à la première couche 3, séparés les uns des autres par des sillons 5.

Ces anneaux en saillie 4a ont pour but de réduire la surface de contact entre le fond de l'ustensile et la surface de chauffe ou autre plan de travail d'une cuisine, afin de limiter l'usure de la couche d'émail 4 à ces seuls anneaux en saillie.

Ces anneaux en saillie 4a jouent également un rôle esthétique.

Ces anneaux en saillie 4a peuvent être remplacés par des spirales, un quadrillage, un damier, un relief moucheté ou des inscriptions en relief.

On donne ci-après à titre d'exemple non limitatif, le mode opératoire d'application des couches d'émail 3 et 4 sur le fond 2 du récipient culinaire 1.

Dans une première étape, on applique sur le fond 2 du récipient en aluminium par pulvérisation pneumatique, une barbotine de fritte d'émail classique pour aluminium, additionnée par exemple de 10% d'agents de durcissement, tels que des fines particules de carbure de silicium.

La couche de barbotine de fritte d'émail est ensuite chauffée à une température comprise entre 50 et 95°C et de préférence égale à 70°C, pendant une durée suffisante pour que la taux d'humidité résiduelle de cette barbotine soit compris entre 0,5 et 10% en poids.

La couche est alors constituée par un «biscuit» présentant une cohésion suffisante pour ne pas être détruit lors des manipulations ultérieures du récipient.

Avant que la température de ce «biscuit» n'ait chuté en dessous de 45°C environ, on applique sur ce «biscuit» encore chaud, par sérigraphie, une pâte d'émail comprenant une fritte d'émail classique pour aluminium, des pigments minéraux, de l'huile de pin en tant que véhicule liquide, de l'alcool, etc. Cette pâte est additionnée d'agents de durcissement tels que du carbure de silicium. La teneur en agents de durcissement est de préférence égale à 20% en poids, mais celle-ci peut varier entre 15 et 40%.

Conformément au procédé de sérigraphie, cette pâte est appliquée sur un masque qui permet de réaliser le décor en relief de la couche d'émail extérieure.

Du fait que le «biscuit» de particules d'émail de la première couche soit pratiquement débarrassé d'humidité, il présente une porosité qui lui permet d'absorber la pâte d'émail sérigraphique appliquée sur lui. Etant donné que ce «biscuit» est encore chaud au moment de cette application, l'huile servant de véhicule à la pâte sérigraphique voit sa viscosité diminuer, de sorte que cette huile s'infiltre dans les pores du «biscuit» et entraîne ainsi dans ces derniers, des particules de la pâte d'émail sérigraphique.

On obtient ainsi une parfaite adhérence entre la couche extérieure d'émail appliquée par sérigraphie et la première couche pauvre en agents de durcissement.

On réchauffe ensuite les couches de particules d'émail appliquées sur le récipient, pour éliminer complètement les constituants volatils de ces couches.

Le récipient est ensuite introduit dans un four pour réaliser la cuisson des couches de fritte d'émail afin de fritter celles-ci et les transformer en émail. Cette température de cuisson est de l'ordre de 560°C dans l'exemple considéré.

On obtient ainsi un récipient culinaire dont le fond 2 est revêtu par une première couche d'émail 3 présentant une épaisseur de l'ordre de 50 µm qui adhère fortement au métal, et par une seconde couche d'émail 4 présentant une épaisseur de l'ordre de 20 µm et une forte résistance à l'abrasion en raison de la présence d'une forte quantité d'agents de durcissement.

Cette seconde couche d'émail 4 adhère fortement à la première couche 3 du fait de l'interpénétration partielle de ces deux couches qui est obtenue grâce au procédé selon l'invention. Cette excellente adhérence des deux couches d'émail 3 et 4 est mise en évidence en soumettant le récipient culinaire à des chocs thermiques répétés.

La composition de base de la fritte d'émail utilisée pour les couches 3 et 4 peut par exemple être la suivante: $B_2O_3$: 3 parties; KOH: 2 parties; ZnO: 10 parties; $SiO_1$: 6 parties, le reste étant constitué par le véhicule liquide.

La composition de base des barbotines de fritte d'émail utilisée peut encore être la suivante:

| | |
|---|---|
| Fritte commercialisé par la firme Bayer, destinée à l'émaillage de l'aluminium: | 100 parties |
| Acide borique: | 4 parties |
| Silicate de soude ou de potasse: | 1 partie |
| Potasse caustique: | 1 partie |
| Colorants: | 5 parties |
| Fritte commercialisée par la firme Ferro, destinée à l'émaillage de l'aluminium: | 100 parties |
| Opacifiant: | 6 parties |
| Acide borique: | 4 parties |
| Silicate de soude ou de potasse: | 1 partie |
| Potasse caustique: | 1 partie |
| Colorants: | 5 parties |
| Eau: | 52 parties |

Les deux couches de fritte d'émail ont le même point de fusion. Cette caractéristique permet de comprendre qu'après fusion on n'a pas un effet de cohésion partielle due à l'interpénétration de deux couches en intersurface comme les procédés connus à l'heure actuelle, mais réellement une interpénétration qui, après fusion unique, fait des deux couches une masse unique d'émail.

Cette propriété est avantageusement exploitée, sachant:

– qu'en procédant conformément à l'invention la deuxième couche est avidement véhiculée à l'intérieur de la première couche;
– que la première couche agit comme une pompe mais également comme un tamis, de telle façon que des grains plus gros que les interstices créées dans la première couche «en bisucit» chaud et sec se trouvent arrêtés dans leur migration à la surface de cette première couche;
– que le contrôle de viscosité de la deuxième couche permet également de régler et de contrôler la pénétration de cette deuxième couche dans la première. Et donc, en conséquence, on peut contrôler et ajuster l'épaisseur dépassante de cette deuxième couche.

A titre d'exemple, cette valeur peut être de 0 à 30–35 µm.

Il est de ce fait aisé de comprendre, que l'on peut donner à la partie de la deuxième couche dépassante des caractéristiques tout à fait différentes de la première couche, bien que sa nature vitrifiable (fritte) soit absolument identique. En effet, en imaginant que l'on charge cette deuxième couche avec des éléments durcissant de grosseurs de grains supérieures à la grosseur des interstices du «biscuit» de la première couche, ces grains resteront dans la partie dépassante de la deuxième couche et formeront une masse compacte extrêmement dure et dont les propriétés seront fonction de la nature des grains qui seront sélectionnés. Notons que ces grains seront bloqués par ce processus dans toute l'épaisseur dépassante de la deuxième couche. Ceci n'étant pas le cas des procédés connus actuellement dans lesquels des grains de nature diverse viennent généralement en surface et rendent ainsi les caractéristiques de l'émail très temporairement performantes.

Evidemment, la deuxième couche peut ne pas comporter d'éléments durcissants.

Le procédé que l'on vient de décrire est particulièrement rapide et économique du fait qu'il évite la cuisson intermédiaire de la première couche d'émail 3. De ce fait on évite que l'aluminium du récipient soit soumis pendant une durée excessive à une température élevée susceptible de compromettre ses propriétés mécaniques et de le déformer ce qui se traduirait par un mauvais contact thermique entre le fond de ce récipient et la surface de chauffe.

Par ailleurs, l'émaillage du fond 2 de ce récipient évite l'opération classique de détourage de ce fond, de sorte que l'épaisseur du métal de ce fond n'est pas affectée.

Ainsi il est possible de réaliser l'ensemble du récipient culinaire avec une épaisseur de métal inférieure à celle utilisée de manière classique, ce qui permet de réduire le coût de fabrication.

Bien entendu, l'invention n'est pas limitée aux exemples que l'on vient de décrire et on peut apporter à ceux-ci de nombreuses modifications.

Ainsi la seconde couche d'émail 4 peut être appliquée sur la première couche 3 autrement que par sérigraphie. Cette seconde couche 4 peut en effet être appliquée par pulvérisation pneumatique comme la première couche, par décalcomanie ou par pistolage à travers un masque ou analogue.

Bien entendu, la première couche d'émail 3 peut recouvrir l'ensemble de la surface extérieure et intérieure du récipient.

Bien entendu, le procédé conforme à l'invention peut également être utilisé pour émailler des ustensiles culinaires en métal ou alliage autre que l'aluminium, comme par exemple la tôle d'acier.

A cet effet, on utilisera des frittes d'émail classiques, pour revêtir la tôle d'acier et présentant une température de cuisson supérieure à celle des frittes d'émail pour aluminium.

On donne ci-après, à titre d'exemple, la composition d'une fritte d'émail pouvant être utilisée pour émailler des récipients culinaires en tôle d'acier.

- fritte: 100 parties
- argile: 4 parties
- bentonite: 0,25 partie
- aluminate de sodium: 0,25 partie
- carbonate de potassium: 0,25 partie
- nitrite de sodium: 0,10 partie
- urée: 0,25 partie
- eau: 44 parties

Dans le cas d'un récipient en acier inoxydable, compte tenu des écarts de dilatation thermique de l'émail et de l'acier inoxydable, pour obtenir un comportement satisfaisant de l'émail à l'utilisation (chocs thermiques et chocs mécaniques), il est nécessaire que celui-ci ait une faible épaisseur.

Cet émail est avantageusement appliqué par sérigraphie pour obtenir un dépôt de 15 à 5 µm d'épaisseur. La première couche étant séchée comme il est décrit précédemment, on applique de suite une deuxième couche d'émail par sérigraphie d'épaisseur de 10 à 20 µm. Cette deuxième couche peut être chargée d'éléments durcisseurs ou pas, selon le but final à obtenir.

Dans le cas d'un récipient en acier inoxydable à fond en aluminium, l'émail du fond du récipient peut être de nature diverse, de celle de l'émail recouvrant la paroi latérale.

Il est intéressant alors, comme dans la première phase décrite ci-dessus, d'utiliser en première couche sur ce fond un dépôt d'émail identique à celui décrit dans la première partie du procédé mais, cette fois, appliqué par sérigraphie, et la seconde couche sera, cette fois, chargée de matière durcissante et appliquée après surcharge de la première couche conformément au procédé selon l'invention.

On obtiendra ainsi un fond émaillé ayant les mêmes performances que celles décrites précédemment. L'ustensile ainsi obtenu présente l'avantage de n'utiliser alors pour sa totale partie émaillée qu'un seul moyen d'application, à savoir la sérigraphie.

Il est intéressant de noter que le présent procédé, du fait de pouvoir obtenir une deuxième couche performante dans sa masse peut être utilisé sur des matières autres que l'aluminium revêtu en première couche selon des procédés et des émaux par ailleurs connus.

Egalement sur une tôle aluminiée, il est possible d'appliquer sur une première couche d'émail basse température, normalement, une deuxième couche selon le présent procédé et dont la migration contrôlée dans la première couche n'atteindra pas la tôle aluminiée. On aura ainsi réalisé deux couches d'émaux dont la première protègera la matière contre l'oxydation et la seconde qui pourra être décorative ou/et performante, si elle est chargée en matière durcissante (cas du fond d'un article de cuisson, par exemple).

De la même manière, le procédé n'est pas limité en ce qui concerne l'émail basse température. La deuxième couche, appliquée comme décrit, étant de même nature par sa fritte que la couche sous-jacente, peut très bien être de fritte haute température (température de séchage 100 à 150°C, température de cuisson 750 à 850°C) et, de ce fait, l'on pourra obtenir les mêmes résultats sur, par exemple, des articles culinaires en tôle émaillée. La particularité étant que l'on peut appliquer sans additif particulier tel que liant ou hydrofuge une couche identique à une autre sous-jacente et ainsi obtenir une cohésion de ces deux couches à cuisson unique, identique à ce que serait une seule couche.

## Revendications

1. Procédé pour émailler le fond d'un récipient culinaire, dans lequel on applique sur ledit fond au moins deux couches de barbotine d'émail, la première couche étant séchée avant l'application de la seconde couche et les deux couches étant cuites en une seule opération, caractérisé en ce que la première couche de barbotine d'émail est séchée à une température et pendant une durée suffisantes pour abaisser son taux d'humidité à une valeur comprise entre 0,5 et 10% en poids, la seconde couche d'émail est appliquée sur la première couche d'émail, ayant ce taux d'humidité, la seconde couche étant appliquée de façon discontinue sous forme de pâte huileuse à travers un masque sérigraphique de façon à obtenir un décor en relief sur la première couche, puis, on procède immédiatement, ou après réchauffage éventuel, à la cuisson desdites couches, pour fritter les émaux.

2. Procédé conforme à la revendications 1, caractérisé en ce que les barbotines de fritte d'émail utilisées pour former les deux couches, contiennent des agents de durcissement.

3. Procédé conforme à la revendication 2, caractérisé en ce que la barbotine d'émail utilisée pour former la seconde couche d'émail a une teneur en agent de durcissement supérieure à celle de la première couche.

## Patentansprüche

1. Verfahren zum Emaillieren des Bodens eines Küchenbehälters, bei welchem auf den Boden wenigstens zwei Schichten aus Emailschlämmung aufgebracht werden, wovon die erste Schicht vor dem Aufbringen der zweiten Schicht getrocknet wird und wobei die zwei Schichten in einem einzigen Vorgang gebrannt werden, dadurch gekennzeichnet, dass die erste Schicht aus Emailschlämmung getrocknet wird mit einer Temperatur und während einer Dauer die ausreichend sind, um ihren Feuchtigkeitsgehalt auf einen Wert zwischen 0,5 und 10 Gewichtsprozent zu vermindern, dass die zweite Emailschicht auf die diesen Feuchtigkeitsgehalt aufweisende erste Emailschicht aufgebracht wird, wobei die zweite Schicht durch eine Maske für Siebdruck in der Form einer öligen Paste diskontinuierlich aufgebracht wird, um auf der ersten Schicht eine Reliefverzierung zu erhalten, dann werden die obigen Schichten unmittelbar oder nach einem eventuellen Erhitzen gebrannt, um die Emaillen zu sintern.

2. Verfahren nach Anspruch 1, dadurch gekennzeichnet, dass die Emailfritte-Aufschlämmungen, die zur Bildung der zwei Schichten verwendet werden, Härtungsmittel enthalten.

3. Verfahren nach Anspruch 2, dadurch gekennzeichnet, dass die zur Bildung der zweiten Emailschicht verwendete Emailschlämme einen höheren Gehalt an Härtungsmitteln als die erste Schicht aufweist.

**Claims**

1. A method of enameling the bottom face of a culinary vessel which consists in applying on said bottom face at least two enamel slip coatings, the first coating being dried before applying the second coating and both coatings being fired in one single step, characterized in that said first enamel slip coating is dried both at a temperature and during a period of time sufficient to reduce its moisture content to a value within the range of 0.5 to 10% by weight, said second enamel coating is applied on said first enamel coating having said moisture content, the second coating being applied discontinuously under the form of an oily paste through a serigraphic mask so as to obtain a relief pattern on said first coating, then the firing of said coatings is immediately, or after possible reheating, carried out in order to sinter the enamels.

2. A method according to claim 1, characterized in that the enamel-frit slips employed for forming the two coatings contain hardening agents.

3. A method according to claim 2, characterized in that the enamel slip employed for forming the second enamel coating contains a higher proportion of hardening agents than the first coating.

0 127 489

FIG_1

FIG_2